# EUROPÄISCHE PATENTANMELDUNG

(11) **EP 3 041 116 A1**
(43) Veröffentlichungstag der Anmeldung: **06.07.2016**
(21) Anmeldenummer: 15201595.4
(22) Anmeldetag: 21.12.2015
(51) Int. Cl.: H02K 7/04, H02K 7/06, H02K 7/116

(54) **ELEKTRISCHE MASCHINE**

(30) Priorität: 31.12.2014 CN 201410853081
(71) Anmelder: Bosch Automotive Products (Changsha) Co., Ltd, Changsha, Hunan 410100 (CN)
(72) Erfinder: Bos, Dries, 410100 Changsha, Hunan Province (CN); Vollmer, Carsten, 410100 Changsha (CN); Schlegel, Jan, 200335 Shanghai (CN)
(74) Vertreter: Bee, Joachim

(57) **Zusammenfassung**

Eine elektrische Maschine weist eine Rotorwelle auf, die eine Schnecke trägt, welche bezogen auf die Drehachse der Rotorwelle mit einer Unwucht versehen ist.

## Beschreibung

Die Erfindung bezieht sich auf eine elektrische Maschine mit einem Stator und einem Rotor mit einer Rotorwelle, die eine Schnecke trägt.

### Stand der Technik

Derartige elektrische Maschinen werden als Stellantriebe beispielsweise in Fahrzeugen eingesetzt, zum Beispiel als Scheibenwischerantriebe. So zeigt die DE 10 2009 054 720 A1 einen elektrischen Antriebsmotor für eine Scheibenwischvorrichtung in einem Fahrzeug, der als ein permanenterregter Gleichstrommotor ausgebildet ist, dessen Rotorwelle Träger eines Ankers mit Spulen ist, welche über eine Kommutierungseinrichtung bestromt werden. Die Rotationsbewegung der Rotorwelle des Antriebsmotors wird über ein Getriebe in eine Drehpendelbewegung des Wischerarms umgesetzt. Das Getriebe wird von einer Schnecke angetrieben, die auf einem außerhalb des Statorgehäuses gelegenen Wellenabschnitt der Rotorwelle aufsitzt. Die Schnecke kämmt mit einem getriebeseitigen Schneckenrad, dessen Drehbewegung über weitere Getriebebauteile in die gewünschte Drehpendelbewegung zum Antrieb des Wischerarms umgesetzt wird.

Um Unwuchten beim Betrieb des Antriebsmotors zu vermeiden, ist es erforderlich, die Rotorwelle einschließlich des Ankers mit hoher Präzision im aufnehmenden Gehäuse des Antriebsmotors zu lagern. Aufgrund des axial verhältnismäßig weit aus dem Statorgehäuse herausragenden Wellenabschnittes der Rotorwelle ist zur Vermeidung weiterer Unwuchten auch auf eine hohe Präzision bei der Herstellung und Montage der Rotorwelle zu achten.

### Offenbarung der Erfindung

Der Erfindung liegt die Aufgabe zugrunde, mit einfachen konstruktiven Maßnahmen eine elektrische Maschine, deren Rotorwelle eine Schnecke trägt, so auszubilden, dass die Gefahr von Unwuchten reduziert ist.

Diese Aufgabe wird erfindungsgemäß mit den Merkmalen des Anspruches 1 gelöst. Die Unteransprüche geben zweckmäßige Weiterbildungen an.

Die erfindungsgemäße elektrische Maschine weist einen Stator und einen Rotor mit einer Rotorwelle auf, die Träger einer Schnecke ist. Über die Schnecke kann ein Getriebe angetrieben werden. Zu diesem Zweck greift die Schnecke beispielsweise in ein Schneckenrad des Getriebes ein. Innerhalb eines Statorgehäuses ist die Rotorwelle in der an sich bekannten Weise drehbar gelagert.

Bei der elektrischen Maschine handelt es sich insbesondere um einen Innenläufermotor, vorzugsweise um einen permanenterregten Gleichstrommotor mit Permanentmagneten und bestrombaren Spulen, deren Wechselfeld mit dem Magnetfeld der Permanentmagnete interagiert. Die Permanentmagnete sind vorteilhafterweise an der Innenseite des umgreifenden Statorgehäuses angeordnet, die Spulen befinden sich auf einem Anker, der drehfest mit der Rotorwelle verbunden ist. Die Spulen werden über eine Kommutierungseinrichtung bestromt.

Die elektrische Maschine wird beispielsweise als Antriebs- bzw. Stellmotor in Fahrzeugen eingesetzt, zum Beispiel als elektrischer Servomotor in einem Lenksystem oder als Stellmotor zum Antrieb einer Scheibenwischvorrichtung oder dergleichen.

Die Schnecke ist gezielt mit einer Unwucht versehen - bezogen auf die Drehachse der Rotorwelle - welche dazu dient, eine Unwucht der Rotorwelle zu kompensieren. Es handelt sich hierbei insbesondere um eine Unwucht 1. Ordnung bzw. eine statische Unwucht. Die Unwuchten von Rotorwelle und Schnecke wirken hierbei in entgegengesetzte radiale Richtungen und gleichen sich aus.

Die Unwucht der Rotorwelle entsteht insbesondere aufgrund einer Rotorwellenbiegung gegenüber der Drehachse. Indem die aufgrund der Biegung entstehende Rotorwellenunwucht über eine gezielt herbeigeführte Unwucht der Schnecke auf der Rotorwelle kompensiert wird, kann auf ein hochpräzises Herstellen und axiales Ausrichten der Rotorwelle verzichtet werden. Aufgrund der Kompensation ist trotz der Rotorwellenunwucht ein ruhiger Lauf der Rotorwelle gewährleistet. Das freie Ende der Rotorwelle kann gegebenenfalls in der Einbaulage der elektrischen Maschine ohne Lagerung sein. Insgesamt wird mit der Kompensationsmaßnahme das Laufverhalten der elektrischen Maschine verbessert und die Lebensdauer erhöht.

Der die Schnecke tragende Wellenabschnitt der Rotorwelle befindet sich, gemäß bevorzugter Ausführung, außerhalb des Statorgehäuses der elektrischen Maschine. Die Rotorwelle ragt axial aus dem Statorgehäuse heraus, auf dem herausragenden Abschnitt befindet sich die Schnecke. Aufgrund der verhältnismäßig langen Ausführung der Rotorwelle ist die Gefahr von Unwuchten durch eine Rotorwellenbiegung erhöht, dies kann jedoch in der beschriebenen Weise durch ein gezieltes Herbeiführen einer Unwucht im Bereich der Schnecke kompensiert werden.

Die Schnecke ist vorzugsweise einteilig mit der Rotorwelle ausgebildet. Es sind aber auch Ausführungen der Schnecke als separates Bauteil möglich, das fest mit der Rotorwelle verbunden ist.

Das Herbeiführen der Schneckenunwucht kann entweder durch Hinzufügen oder durch Wegnehmen einer Unwuchtmasse herbeigeführt werden. Sowohl beim Hinzufügen (positive Unwuchtmasse) als auch beim Wegnehmen (negative Unwuchtmasse) ist der Bereich der Schnecke betroffen, indem beispielsweise beim Wegnehmen ein Teil des Schneckengewindes entfernt oder weggelassen wird und beim Hinzufügen eine oder mehrere Unwuchtmassen im Gewindebereich der Schnecke hinzugefügt werden.

Zweckmäßigerweise sind an zwei axial beabstandeten Positionen der Schnecke Unwuchten angeordnet. Diese befinden sich vorzugsweise an den axial gegenüberliegenden Endbereichen der Schnecke, also am Gewindeanfang und am Gewindeende der Schnecke, so dass der Eingriff der Schnecke in das Schneckenrad nicht durch die Unwuchten beeinträchtigt wird. Vorteilhafterweise erstreckt sich die Unwucht in Umfangsrichtung gesehen über ein begrenztes Winkelsegment, das insbesondere maximal 180° beträgt, wobei gegebenenfalls auch kleinere Winkelsegmente möglich sind, beispielsweise maximal 90° oder maximal 120°. Soweit zwei Unwuchten auf der Schnecke vorhanden sind, befinden sich diese insbesondere im gleichen Winkelsegment. Sie liegen somit zumindest annähernd, vorzugsweise exakt an der gleichen Umfangsseite der Schnecke.

Des Weiteren ist es vorteilhaft, dass im Falle von zwei Schneckenunwuchten gleiche Unwuchttypen vorhanden sind, also entweder durch Wegnehmen zwei negative Unwuchtmassen oder durch Hinzufügen zwei positive Unwuchtmassen. Gegebenenfalls kommen aber auch gemischte Typen in Betracht, also eine negative und eine positive Unwuchtmasse an der Schnecke.

Die mit einer Unwucht versehene Schnecke befindet sich insbesondere auf einem axial verhältnismäßig weit herausragenden Wellenabschnitt der Rotorwelle. Hierbei kann es zweckmäßig sein, dass die dem Statorgehäuse nächstgelegene Unwuchtmasse auf die Schnecke einen axialen Abstand zum Statorgehäuse aufweist, welcher mindestens der halben axialen Länge des Statorgehäuses entspricht. Bei diesen verhältnismäßig lang ausgebildeten Rotorwellen besteht eine erhöhte Gefahr einer Rotorwellenunwucht durch Wellenbiegung, was durch die gezielt herbeigeführte Schneckenunwucht kompensiert wird.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer elektrischen Maschine mit einem Stator und einem Rotor, dessen Rotorwelle auf einem außerhalb des Statorgehäuses gelegenen Wellenabschnitt eine Schnecke trägt,
- Fig. 2: eine vergrößerte Darstellung der Rotorwelle im Bereich der Schnecke, die an axial gegenüberliegenden Positionen negative Unwuchtmassen aufweist, welche durch Wegnehmen eines Teils des Schneckengewindes erzeugt sind,
- Fig. 3: eine weitere Darstellung der Rotorwelle mit der Schnecke, mit positiven Unwuchtmassen, die durch Hinzufügen am Anfang und am Ende des Schneckengewindes erzeugt sind,
- Fig. 4: einen Schnitt durch die Schnecke quer zur Längsachse mit beispielhaft eingetragenen positiven und negativen Unwuchtmassen.

In den Figuren sind gleiche Bauteile mit gleichen Bezugszeichen versehen.

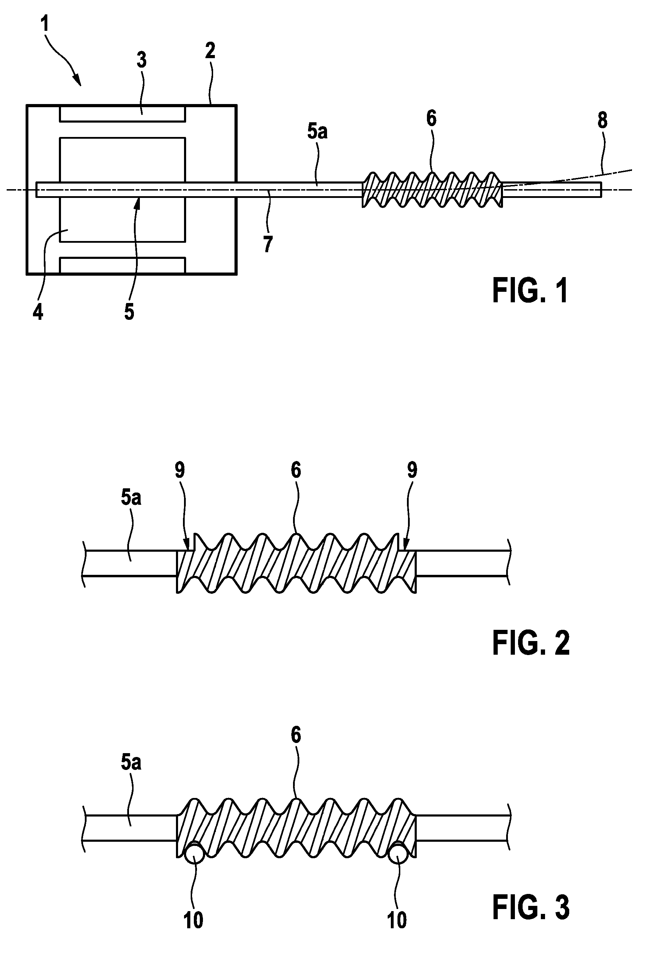

In Fig. 1 ist eine elektrische Maschine 1 dargestellt, die beispielhaft als ein permanenterregter Gleichstrommotor ausgebildet ist und einen Stator mit einem Statorgehäuse 2 sowie einen Rotor mit einer Rotorwelle 5 umfasst, welche vom Stator umgriffen wird. An der Innenwand des Statorgehäuses 2 befinden sich Permanentmagnete 3, deren Magnetfeld mit einem Wechselfeld interagiert, das von Spulen auf einem Ankerpaket 4 erzeugt wird, welches fest mit der Rotorwelle 5 verbunden ist.

Die Rotorwelle 5 ist im Statorgehäuse 2 drehbar gelagert und weist einen aus dem Statorgehäuse 2 axial herausragenden Wellenabschnitt 5a auf, der Träger einer Schnecke 6 ist. Die Schnecke 6 ist einteilig mit der Rotorwelle 5 ausgebildet; gegebenenfalls kommen auch zweiteilige Ausführungen in Betracht, bei denen die Schnecke 6 separat von der Rotorwelle 5 ausgebildet, jedoch fest mit der Rotorwelle 5 verbunden ist. Die Schnecke 6 befindet sich axial auf Abstand zu dem Statorgehäuse 2. Dieser axiale Abstand beträgt im Ausführungsbeispiel mindestens die Hälfte der axialen Länge des Statorgehäuses 2.

Die Rotorwelle 5 kann um ihre Drehachse 7 rotieren, die bei exakt geradliniger Ausrichtung der Rotorwelle 5 mit der Längsachse der Rotorwelle zusammenfällt. Im Bereich der freien Stirnseite ist ein gebogener Verlauf der Längsachse 8 der Rotorwelle 5 dargestellt, der aufgrund einer Wellenbiegung entstehen kann. Hierdurch entstehen Wellenunwuchten 1. Ordnung, die zu einem unrunden Lauf der Rotorwelle und zu erheblichen Belastungen der Bauteile der elektrischen Maschine und auch der Getriebebauteile führen kann, welche über die Schnecke 6 angetrieben werden.

In den folgenden Figuren 2 bis 4 sind Ausführungsbeispiele für das gezielte Herbeiführen einer Unwucht im Bereich der Schnecke 6 dargestellt, mit der die Rotorwellenunwucht kompensiert werden kann. Die Schneckenunwucht wird hierbei entweder wie in Fig. 2 dargestellt durch Weglassen einer Unwuchtmasse oder wie in Fig. 3 dargestellt durch Hinzufügen einer Unwuchtmasse erzeugt. Die Rotorwellenunwucht, welche wie in Fig. 1 dargestellt durch Biegung der Welle 5 und damit durch ein Auseinanderfallen von Drehachse 7 und Längsachse 8 entsteht, wird durch die Schneckenunwucht ausgeglichen.

In Fig. 2 weist die Schnecke 6 zwei negative Unwuchtmassen 9 auf, die durch Weglassen eines Teils des Gewindes der Schnecke 6 an axial gegenüberliegenden Endbereichen hergestellt wird. Die negativen Unwuchtmassen 9 befinden sich unmittelbar im Bereich der jeweiligen Stirnseiten der Schnecken 6, so dass der Eingriff der Verzahnung der Schnecke 6 in ein zugeordnetes Schneckenrad nicht durch die negativen Unwuchtmassen 9 beeinflusst wird. Die negative Unwuchtmasse 9 wird beispielsweise durch Entfernen eines stirnseitigen Gewindegangs erzeugt. Die beiden negativen Unwuchtmassen 9 erstrecken sich jedoch in Umfangsrichtung nicht über 360°, sondern lediglich über ein Winkelsegment von maximal 180°. Beide negativen Unwuchtmassen 9 liegen innerhalb des gleichen Winkelsegmentes.

In Radialrichtung erfolgt das Erzeugen der negativen Unwuchtmasse 9 beispielhaft durch Abtragen des Gewindes der Schnecke bis zum Außendurchmesser des Wellenabschnittes 5a der Rotorwelle. Es kann aber auch vorteilhaft sein, in Radialrichtung mehr abzutragen, so dass im Bereich der negativen Unwuchtmassen 9 gegenüber dem Außenmantel des Wellenabschnittes 5a ein radialer Rücksprung entsteht, oder weniger abzutragen, so dass ein radialer Überstand stehen bleibt.

In Fig. 3 ist die Schnecke 6 auf dem Wellenabschnitt 5a mit positiven Unwuchtmassen 10 in den beiden axial gegenüberliegenden Endbereichen benachbart zur jeweiligen Stirnseite der Schnecke 6 dargestellt. Die positiven Unwuchtmassen 10 sind als zusätzliche Einzelmassen ausgeführt, die auf die Schnecke 6 aufgebracht und fest mit dieser verbunden werden. Die beiden Unwuchtmassen 10 befinden sich ebenfalls innerhalb des gleichen Winkelsegmentes auf der Schnecke 6, sie liegen somit auf der gleichen Seite der Schnecke.

Die beiden negativen Unwuchtmassen 9 gemäß Fig. 2 sind gleich groß ausgebildet. Auch die beiden positiven Unwuchtmassen 10 gemäß Fig. 3 sind gleich groß ausgeführt. Es kann jedoch auch vorteilhaft sein, an den verschiedenen axialen Positionen der Schnecke zwei ungleich große negative oder positive Unwuchtmassen anzuordnen. Des Weiteren ist es möglich, an der Schnecke an einer Seite eine positive Unwuchtmasse und an der axial gegenüberliegenden Seite eine negative Unwuchtmasse anzuordnen. Diese können im Hinblick auf ihren Betrag gleich groß oder unterschiedlich groß ausfallen.

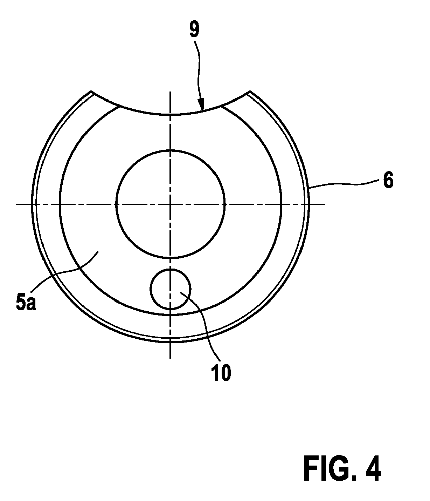

In Fig. 4 ist ein Schnitt durch die Rotorwelle mit dem Wellenabschnitt 5a und die Schnecke 6 dargestellt. Exemplarisch sind sowohl eine negative Unwuchtmasse 9 als auch eine positive Unwuchtmasse 10 im Bereich der Schnecke 6 dargestellt. Die negative Unwuchtmasse 9 ist als teilkreisförmiges Segment aus der Schnecke 6 herausgenommen, sie erstreckt sich in Umfangsrichtung über ein Winkelsegment von zirka 90°. Die positive Unwuchtmasse 10 befindet sich radial auf der der negativen Unwuchtmasse 9 gegenüberliegenden Umfangsseite und ist als Zusatzmasse ausgeführt, die mit dem Gewinde der Schnecke 6 verbunden ist.

## Patentansprüche

1. Elektrische Maschine mit einem Stator und einem Rotor mit einer Rotorwelle (5), die eine Schnecke (6) trägt, **dadurch gekennzeichnet, dass** die Schnecke (6) bezogen auf die Drehachse (7) der Rotorwelle (5) eine Unwucht (9, 10) aufweist, die eine Unwucht der Rotorwelle (5) kompensiert.

2. Elektrische Maschine nach Anspruch 1, **dadurch gekennzeichnet, dass** die Rotorwelle (5) auf einem außerhalb eines Statorgehäuses (2) des Stators gelegenen Wellenabschnitt (5a) die Schnecke (6) trägt und lediglich eine Unwucht des außerhalb des Statorgehäuses (2) gelegenen Wellenabschnittes (5a) von der Unwucht (9, 10) der Schnecke (6) kompensiert wird.

3. Elektrische Maschine nach Anspruch 1 oder 2, **dadurch gekennzeichnet, dass** die Unwucht der Schnecke (6) als Hinzufügen mindestens einer Unwuchtmasse (10) ausgebildet ist, die sich an der Schnecke (6) befindet.

4. Elektrische Maschine nach Anspruch 1 oder 2, **dadurch gekennzeichnet, dass** die Unwucht der Schnecke (6) als Wegnehmen mindestens einer Unwuchtmasse (9) ausgebildet ist.

5. Elektrische Maschine nach Anspruch 3 oder 4, **dadurch gekennzeichnet, dass** die durch Wegnehmen oder Hinzufügen gebildete Unwucht (9, 10) der Schnecke (6) sich in Umfangsrichtung über ein Winkelsegment von maximal 180° auf der Schnecke (6) erstreckt.

6. Elektrische Maschine nach einem der Ansprüche 3 bis 5, **dadurch gekennzeichnet, dass** an zwei axial beabstandeten Positionen der Schnecke (6) Unwuchten (9, 10) angeordnet sind.

7. Elektrische Maschine nach Anspruch 6, **dadurch gekennzeichnet, dass** die zwei Unwuchten (9, 10) in einem gleichen Winkelsegment auf der Schnecke (6) angeordnet sind.

8. Elektrische Maschine nach Anspruch 6 oder 7, **dadurch gekennzeichnet, dass** die zwei Unwuchten (9, 10) an den axial gegenüberliegenden Endbereichen der Schnecke (6) angeordnet sind.

9. Elektrische Maschine nach einem der Ansprüche 6 bis 8, **dadurch gekennzeichnet, dass** die zwei Unwuchten (9, 10) auf der Schnecke (6) gleich groß sind.

10. Elektrische Maschine nach einem der Ansprüche 1 bis 9, **dadurch gekennzeichnet, dass** die Rotorwelle (5) im Statorgehäuse (2) Träger eines Ankers mit Spulen ist, die über eine Kommutierungseinrichtung bestrombar sind.

11. Elektrische Maschine nach einem der Ansprüche 1 bis 10, **dadurch gekennzeichnet, dass** die Schnecke (6) einteilig mit der Rotorwelle (5) ausgebildet ist.

12. Elektrische Maschine nach einem der Ansprüche 1 bis 11, **dadurch gekennzeichnet, dass** der axiale Abstand der Unwucht (9, 10) auf der Schnecke (6) vom Statorgehäuse (2) mindestens der halben axialen Länge des Statorgehäuses (2) entspricht.
